# EUROPEAN PATENT SPECIFICATION

(11) **EP 0 644 859 B1**
(45) Date of publication and mention of the grant of the patent: **13.03.1996**
(21) Application number: 93902102.8
(22) Date of filing: 23.12.1992
(51) Int. Cl.: C02F 3/30

(54) **PROCESS AND PLANT FOR THE PURIFICATION OF POLLUTED WATER**
VERFAHREN UND ANLAGE ZUR REINIGUNG VON VERUNREINIGTEM WASSER
PROCEDE ET INSTALLATION D'EPURATION D'EAUX POLLUEES

(30) Priority: 23.12.1991 DK 2062/91
(43) Date of publication of application: 29.03.1995
(73) Proprietor: I. KRÜGER SYSTEMS A/S, DK-2860 Soborg (DK)
(72) Inventor: KERRN-JESPERSEN, Jens, Peter, DK-2900 Hellerup (DK); HENZE, Mogens, DK-2850 N erum (DK)
(74) Representative: Kyed, Iver
(86) International application number: DK9200397
(87) International publication number: WO9313023

(56) References cited:
- EP-A- 0 014 394
- EP-A- 0 247 212
- WO-A-88/08410
- WO-A-90/00158
- US-A- 4 056 465

## Description

The invention relates to a process for the biological purification of polluted water, such as waste water, wherein the polluted water is successively subjected to an anaerobic, an anoxic and an aerobic treatment in the presence of micro-organisms in order to reduce the nitrogen and phosphorus contents of the water.

The ever increasing eutrophication of rivers, lakes and seas has resulted in more and more countries making requirements for the purification of waste water, in particular for the removal of nitrogen and phosphorus, and in the existing requirements becoming more and more strict.

Various processes for the biological purification of waste water are known wherein at least a partial removal of nitrogen and phosphorus from the waste water is effected. Such known processes for the purification of waste water using bacteria are disclosed in i.a. DK patents Nos. 149,767 and 153,832. EP-A-0 247 212 discloses a plant and a process in which waste water is sujected to denitrification followed by nitrification under the use of separate microorganisms.

In the known processes for the biological removal of nitrogen and phosphorus from waste water, the amount of easily decomposable organic matter contained in the waste water is often a limiting factor in the effectiveness of the processes, and where the waste water content of easily decomposable organic matter is insufficient, it is often necessary to add organic matter in order to obtain a desired degree of purification.

The biological removal of phosphorus from the waste water is a result of the presence of phosphorus accumulating bacteria which, in anaerobic conditions, absorb easily decomposable organic matter from the untreated waste water which organic matter is stored in the form of e.g. polyhydroxy butyrate (PHB). The bacteria acquire the energy to perform such storing by decomposing polyphosphate from an intracellular storage. Hereby orthophosphate ions are produced which are released to the liquid phase.

When the phosphorus accumulating bacteria are subsequently subjected to aerobic conditions the storage of organic matter is consumed as oxygen works as an oxidant. The bacteria use the energy thus produced partly for the absorption of orthophosphate ions from the liquid phase and for the accumulation thereof in the form of polyphosphate and partly for the basic metabolism and growth of the phosphorus accumulating bacteria.

The removal of phosphorus from the waste water is subsequently achieved by removing the excess production of phosphorus accumulating bacteria at a point in the process when their polyphosphate storages are full.

The removal of nitrogen is based on a nitrification followed by a denitrification. The nitrification which is effected in aerobic conditions consists in oxidiation of ammonia nitrogen into nitrate simultaneously with a decomposition of available organic matter, if any, whereas the denitrification which is effected in anoxic conditions consists in the consumption of organic matter using nitrate ions as oxidants. In this oxidation nitrate nitrogen is reduced to free nitrogen (N₂) which is released in its gaseous form.

Part of the phosphorus accumulating bacteria are also capable of consuming stored organic matter in anoxic conditions as nitrate acts as an oxidant. As it is the case when the consumption of organic matter is effected with the use of oxygen as an oxidant, the energy produced in anoxic conditions is used partly for the absorption and for the accumulation of phosphate in the form of polyphosphate and partly for the growth of the phosphorus accumulating bacteria.

When nitrate acts as an oxidant as it is the case in the anoxic conditions described above, a reduction of nitrate into free nitrogen takes place as disclosed above, said free nitrogen being released in gaseous form. This means that the organic matter absorbed by the phosphorus accumulating bacteria using nitrate as an oxidant is used for phosphorus absorption and accumulation as well as for denitrification.

Tests have shown that in an activated sludge method, such as the ones described above wherein a mixture of micro-organisms are successively subjected to anaerobic, anoxic and aerobic conditions, only about half of the phosphorus accumulating bacteria are capable of absorbing and accumulating phosphate ions in anoxic conditions and thus of using nitrate as an oxidant. Thus, only half of the total amount of organic matter absorbed by the phosphorus accumulating bacteria is used for denitrification. The purification of waste water by an activated sludge process is disclosed in WO-A-8 808 410. In this prior art teaching, the water is mixed with a culture of microorganisms, and the mixture is successively subjected to anaerobic, anoxic and aerobic conditions.

If all of the phosphorus accumulating bacteria were capable of using nitrate as an oxidant, it would be possible to obtain an improved nitrogen removal without the addition of organic matter to waste water which is comparatively poor in organic matter as, in that case, there would be more organic matter available for the nitrogen removal, i.e. the denitrification.

The present invention is based on the discovery that by giving the phosphorus accumulating micro-organisms such growth conditions that mainly micro-organisms capable of using nitrate as an oxidant and thus capable of absorbing phosphorus in anoxic condition and store it in the form of polyphosphate are developed, a substantially improved exploitation of organic matter contained in the polluted water is obtained thereby avoiding altogether or reducing the addition of organic matter to polluted water which is poor in organic matter.

The process according to the invention is characterized in that, on the one hand, the anaerobic and the anoxic treatment, and on the other hand, the aerobic treatment are carried out in the presence of separate micro-organism cultures.

The term "separate micro-organism cultures" denotes that the major part of the micro-organism culture(s) used in the anaerobic and anoxic treatments is kept apart from the micro-organism culture(s) used in the aerobic treatment. In practice the liquid which has been subjected to an anaerobic/anoxic treatment and which is subsequently to undergo an aerobic treatment, will unavoidably contain small amounts of micro-organisms originating from the anaerobic/anoxic treatments, and minor amounts of micro-organisms may also be transported from the aerobic treatment step to the anaerobic/anoxic treatment steps along with recycled water.

In the known methods of the kind described above a mixture containing i.a. phosphorus accumulating heterotrophic bacteria, phosphorus accumulating denitrificating heterotrophic bacteria, non-phosphorus accumulating denitrificating heterotrophic bacteria and nitrificating bacteria will successively be subjected to anaerobic, anoxic and aerobic conditions and consequently they are sometimes exposed to conditions in which they are not active. In other words part of the bacteria are inactive for a part of the time and in some process steps they will take up space for active bacteria.

By using separate micro-organism cultures in the anaerobic/anoxic and aerobic treatments, respectively, of the polluted water in accordance with the present invention principally propagation of micro-organisms adapted to live in anaerobic/anoxic and aerobic conditions, respectively, is effected. Thereby a larger part of the micro-organisms becomes active in the treatment steps mentioned, which i.a. results in that the ratio of phosphorus accumulating micro-organisms capable of using nitrate as an oxidant to phosphorus accumulating micro-organisms capable of using only oxygen as an oxidant, is shifted in favour of the former whereby, as explained above, improved exploitation of the organic matter contained in the polluted water is obtained.

In addition to an improved exploitation of organic matter the process according to the invention presents the advantage that the reaction rate per unit mass of biomass is increased thereby allowing the amount of biomass to be reduced or the total reaction rate of the plant to be increased.

The process according to the invention may by used either in a suspension method or in a fixed-bed method or in a combination of the two methods.

In the former method a mixture of polluted water, such as waste water which may optionally have been subjected to a preclarification treatment, and a micro-organism culture are successively subjected to an anaerobic and an anoxic treatment in one or more treatment zones following which the micro-organism culture is separated from the water and then another micro-organism culture is added to the water and subsequently the mixture thus formed is subjected to treatment in an aerobic treatment zone, and wherein the micro-organism culture is separated from the water thus treated and a part of the water is recycled to the anoxic treatment zone.

In the method described above recycling is preferably carried out of the micro-organism culture which is separated off after the anoxic treatment and the separated culture or a part therof is recycled to the anaerobic zone.

In a corresponding manner the micro-organism culture separated from the aerobically treated water may be recycled to the aerobic treatment zone.

Such separation is carried out e.g. in a precipitation tank.

According to a particular embodiment of the process described above the anaerobic and the anoxic treatments are carried out in two separate treatment zones wherein anaerobic and anoxic conditions are alternatingly established and wherein polluted water is always conducted to the zone where anaerobic conditions are maintained.

The excess micro-organisms used in connection with the anaerobic/anoxic treatments are preferably removed at such times when the phosphorus content of the micro-organisms is high.

In the fixed-bed method at least two immobilised micro-organism cultures which are kept in anaerobic or anoxic and aerobic conditions, respectively, are used and wherein a part of the water which leaves the micro-organism culture kept in aerobic conditions is recycled to the micro-organism culture which is kept in anoxic conditions.

In this method the first immobilised micro-organism culture is preferably kept in alternatingly anaerobic and anoxic conditions and the polluted water is conducted to the immobilised micro-organism culture which is kept in anaerobic conditions.

According to a preferred embodiment of the above process three immobilised micro-organism cultures are used and the two first immobilised micro-organism cultures of the three are alternatingly kept in anaerobic and anoxic conditions and polluted water is alternatingly conducted to the first and the second of the two first immobilised micro-organism cultures, polluted water, however, always being conducted to the immobilised micro-organism culture which is kept in anaerobic conditions whereas the discharge from the immobilised micro-organism culture which is kept in anaerobic conditions is conducted to the second of the two first immobilised micro-organism cultures together with nitrate-containing water recycled from the immobilised micro-organism culture which is kept in aerobic conditions.

As mentioned the two methods described above may be combined. The aerobic treatment in the former method may for example be carried out using an immobilised micro-organism culture, viz. by conducting the water which has been subjected to successive anaerobic and anoxic treatments through an immobilised aerobic micro-organism culture and by recycling a part of the water thus aerobically treated to the anoxic treatment zone.

In a corresponding manner the anaerobic and the anoxic treatments may be carried out using one or more immobilised micro-organism cultures following which the water thus treated may be subjected to an aerobic treatment in the presence of micro-organisms suspended in the water.

A particularly preferred embodiment of the process according to the invention is characterized in successively subjecting the polluted water to an anaerobic and an anoxic treatment in two zones using a suspended micro-organism culture, separating the micro-organism culture from the water thus treated, said micro-organism culture being recycled to the anaerobic treatment zone, and subjecting the water relieved of the micro-organism culture to an aerobic treatment with an immobilised micro-organism culture following which a part of the aerobically treated water is recycled to the anoxic treatment step.

The excess micro-organisms used in connection with the anaerobic/anoxic treatments are preferably removed at such times when the phosphorus content of the micro-organisms is high.

The invention also relates to a plant for carrying out the process described above.

The plant according to the invention is characterized in that it comprises means for successively subjecting polluted water to an anaerobic and an anoxic treatment using a first micro-organism culture, means for subjecting the anaerobically and anoxically treated water to an aerobic treatment using a second micro-organism culture which is different from the first micro-organism culture, means for recycling aerobically treated water to the means for treating the water in anoxic conditions and optionally means for removing the excess sludge from the plant.

A preferred embodiment of the plant described above is characterized in that the means for anaerobic and anoxic treatment of the water using the first micro-organism culture comprise an anaerobic and an anoxic tank, means for separating off sludge from the anoxically treated water and means for recycling the sludge thus separated to the anaerobic tank.

A second preferred embodiment of the plant described above is characterized in that the means for anaerobic and anoxic treatment of the water using the first micro-organism culture comprise at least one biological filter comprising a carrier material to which the micro-organism culture is attached.

A further preferred embodiment of the plant described above is characterized in that the means for aerobic treatment of the anaerobically and anoxically treated water using the second micro-organism culture comprise an aerobic tank, means for separating sludge from the aerobically treated water and means for recycling the sludge thus separated to the aerobic tank.

Yet another preferred embodiment of the plant described above is characterized in that the means for aerobic treatment of the anaerobically and anoxically treated water using the second micro-organism culture comprise a biological filter comprising a carrier material to which the micro-organism culture is attached.

The biological filters used are preferably constructed such that they retain suspended matter contained in the water.

Preferably, the plant comprises further means for periodical backwashing of the filters for removal of excess micro-organism containing material from the filters.

Alternatively, there may also be a separate separation means, e.g. in the form of an additional filter, a precipitation tank or a flotation plant for the separation of suspended matter, including micro-organisms from water leaving the filters.

The plant may further comprise means for periodically providing an increased hydraulic load on the filters. Such means serve to achieve increased removal of micro-organisms from the filters at desired points in time.

A particularly preferred embodiment of the plant according to the invention comprises three biological filters connected in series wherein anaerobic, anoxic and aerobic conditions, respectively, may be maintained, and where it further comprises means for alternatingly conducting polluted water to the two first filters and for alternatingly changing the treatment conditions in said filters from anaerobic to anoxic treatment and vice versa thereby establishing anaerobic conditions in the filter to which the polluted water is first conducted.

To maintain a sufficiently heavy flow of water through the filters it may be convenient to recycle a part of the water which leaves a filter to the inlet of that filter.

Finally, it should be noted that the anaerobic treatment may be effected in more successive hydraulically separated treatment zones or tanks and that the same applies to the anoxic and aerobic treatments.

In this connection it should be noted that the polluted water may be supplied to one or more of the anaerobic zones.

In a corresponding manner and where filters are used, several successive filters may be used wherein the same treatment conditions are maintained and in such instances the polluted waste water may also be fed to one or more anaerobically operating filters.

In the same manner the anaerobically treated water may be distributed to several anoxic filters.

The invention will now be described in detail with reference to the drawings, wherein
- Fig. 1: is a flow diagram illustrating phase 1 of the operation of a preferred embodiment of a water purification plant according to the invention,
- Fig. 2: is a flow diagram illustrating phase 2 of the operation of the purification plant described in connection with Fig. 1,
- Fig. 3: is a flow diagram illustrating an alternative aerobic treatment of waste water which has been subjected to an anaerobic and an anoxic treatment in a plant as shown in Figs. 1 and 2,
- Fig. 4: is a flow diagram illustrating a further embodiment of a purification plant according to the invention, and
- Fig. 5: is a flow diagram illustrating yet a preferred embodiment of a water purification plant according to the invention.

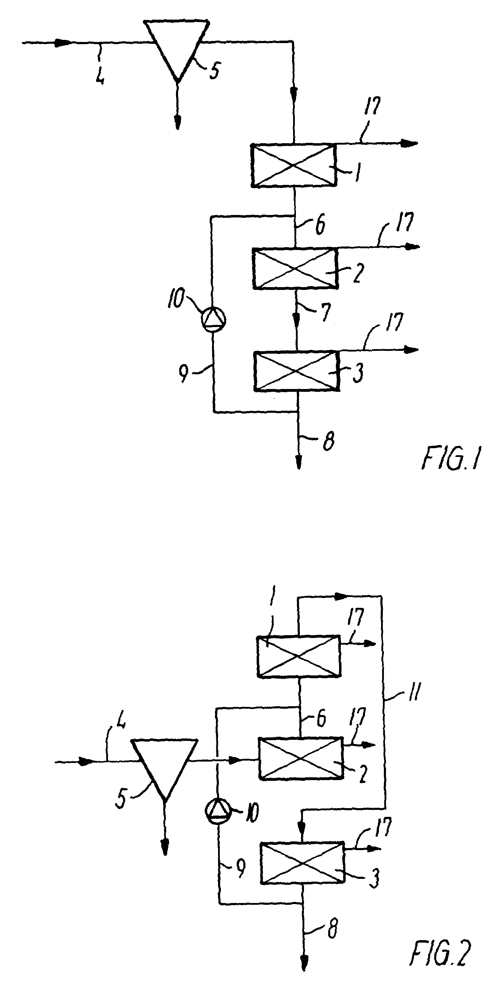

The purification plant shown in Fig. 1 comprises three filters 1,2,3 connected in series each comprising a carrier material and an (immobilised) bacteria culture attached thereto. The filter 1 is connected to a feed conduit 4 for the supply of untreated waste water. In the feed conduit 4 a precipitation tank 5 may e.g. be positioned for the removal of a part of the suspended solid matter contained in the untreated waste water. The plant further comprises a conduit 6 which connects the filter 1 to the filter 2, and a conduit 7 which connects the filter 2 to the filter 3. Lastly the plant shown comprises a conduit 8 for the discharge of purified waste water from the filter 3 and a recycling conduit 9, wherein a pump 10 is located. The conduit 9 connecting the conduit 8 to the conduit 6 serves to conduct a part of the purified waste water leaving the filter 3 through the conduit 8 back to the filter 2.

As will appear from Fig. 2 the plant shown therein corresponds to the one shown in Fig. 1 except that the feed conduit 4 and the precipitation tank 5 located therein are connected to the filter 2 and that the conduit 7 connecting filters 2 and 3 has been replaced by a conduit 11 connecting filters 1 and 3.

In phase l anaerobic conditions are maintained in the filter 1 which results in the phosphorus accumulating bacteria attached to the carrier material absorbing easily decomposable organic matter contained in the untreated waste water and simultaneously releasing phosphate ions. The water flowing through the conduit 6 from the filter 1 to the filter 2 and which contains relatively large amounts of phosphate ions is mixed with nitrate-containing water which is supplied through the conduit 9 from the filter 3.

In the filter 2 there prevails anoxic conditions and the phosphorus accumulating bacteria present therein consume their storages of organic matter using nitrate as an oxidant. Hereby nitrate is reduced to free nitrogen which leaves in its gaseous form. The bacteria use the energy thus produced partly for basic metabolism and growth and partly for storaging phosphate in the form of polyphosphate. The partially treated water from the filter 2 flows through the conduit 7 to the filter 3 wherein aerobic conditions are maintained. This means that a biological conversion of ammonia nitrogen into nitrate is effected therein simultaneously with any organic matter present being decomposed. Hereby nitrate-containing waste water is produced of which a part is recycled to the filter 2 through the recycling conduit 9.

After a suitable period the plant is changed over by supplying the untreated waste water to the filter 2 as shown in Fig. 2 and the water leaving the filter 2 is conducted to the filter 1 through the conduit 6 from where, following treatment, it is conducted to the filter 3 through the conduit 11.

In phase 2 anaerobic conditions are maintained in the filter 2 and anoxic conditions in the filter 1 whereas aerobic conditions are maintained in the filter 3 like in phase 1.

After a suitable period of time the plant is again changed over and a new phase 1 is initiated.

In the described embodiment of the process according to the invention an accumulation of phosphorus accumulating bacteria is effected in filters 1 and 2 and part of said bacteria are removed from the filters at intervals by backwashing when the phosphorus storages of the bacteria are full.

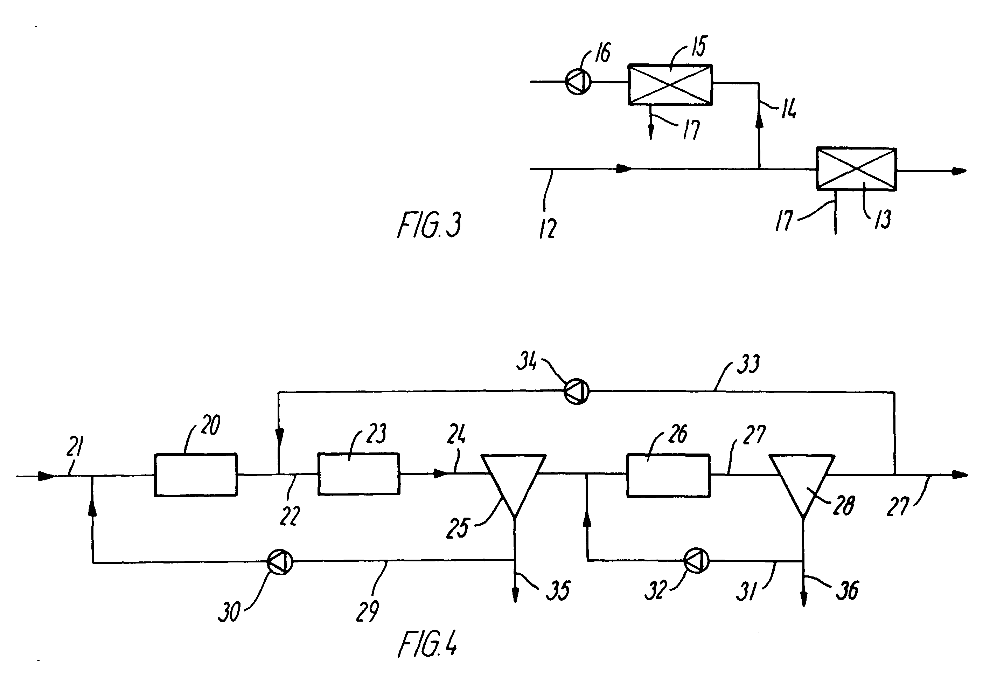

Fig. 3 shows a conduit 12 for anaerobically and anoxically treated waste water wherein a filter 13 is located which contains a carrier (filter) medium which effectively retains suspended matter, and a bacteria culture. A recycling conduit 14 wherein an additional filter 15 and a recycling pump 16 for nitrate-containing water are located is on the one hand connected to the conduit 12 on the upstream side of the filter 13 and on the other to the conduit 6 in Figs. 1 and 2.

As opposed to the filter 13 and in addition to a micro-organism culture the filter 15 comprises a comparatively coarse carrier (filter) medium. By using such coarse filter medium the pressure loss in the recycling conduit 14 is reduced. Aerobic conditions are maintained in the filter 13 as well as in the filter 15.

Excess biomass from the filters 1, 2, 3 and 13 and 15 may be removed by backwashing of the filters with water. The excess biomass is removed together with the washing water through the conduits 17.

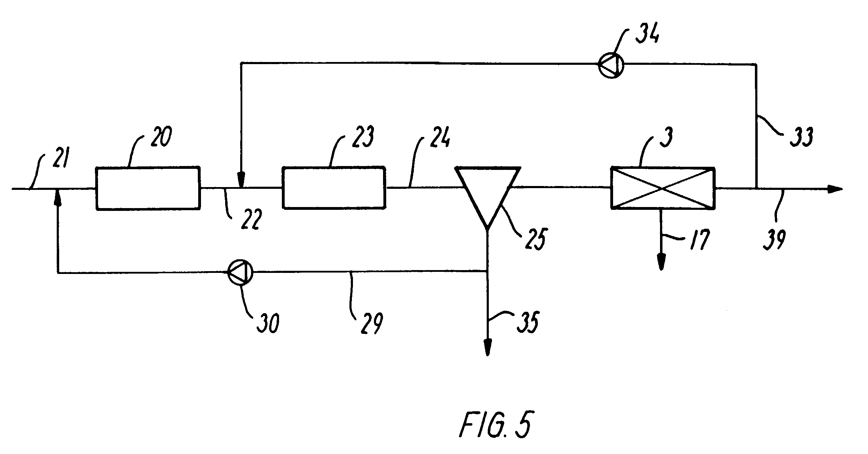

The water purification plant shown in Fig. 4 comprises a tank 20 with a feed conduit 21 for untreated waste water and a communication conduit 22 connected to an additional tank 23. The latter is connected to an additional tank 26 through a conduit 24 wherein a precipitation tank 25 is located, said tank 26 having a discharge conduit 27 wherein a precipitation tank 28 is located. The bottom of the precipitation tank 25 is connected to the feed conduit 21 through a sludge recycling conduit 29 wherein a pump 30 is located and the bottom of the precipitation tank 28 is connected to the conduit 24 through a sludge recycling conduit 31 wherein a sludge pump 32 is located. Lastly the plant comprises a water recycling conduit 33, wherein a pump 34 is located and which is connected to the discharge conduit 27 on the downstream side of the precipitation tank 28 and the communication conduit 22.

In the plant shown the untreated waste water supplied through the supply conduit 21 is mixed with recycled sludge supplied through the sludge recycling conduit 29 and the mixture is introduced into the tank 20 wherein anaerobic conditions are maintained. The anaerobically treated water and sludge are introduced into the tank 23 following admixture with nitrate-containing water supplied through the water recycling conduit 33. In the tank 23 anoxic conditions are maintained. After leaving the tank 23 the water flows through the conduit 24 to the precipitation tank 25 wherein sludge is separated off and further to the tank 26 wherein aerobic conditions are maintained. From the bottom of the precipitation tank 25 activated sludge is removed and conducted through the sludge recycling conduit 29 to the feed conduit 21.

The aerobically treated water flows from the tank 26 to the precipitation tank 28 and further through the discharge conduit 27 from where a part of the nitrate-containing water is removed and recycled to the communication conduit 22 through the water recycling conduit 33. Lastly activated sludge removed through the bottom of the precipitation tank 28 is conducted back to the conduit 24.

In the tanks 20, 23 and 26 processes identical to the ones explained in connection with the disclosures of Figs. 1 and 2 are carried out.

Excess biomass can be removed from the plant through the conduits 35 and 36 from the precipitation tanks 25 and 28, respectively.

The water purification plant shown in Fig. 5 comprises a tank 20 with an feed conduit 21 for untreated waste water and a communication conduit 22 connected to an additional tank 23.

The latter is connected to a filter 3 through a conduit 24 wherein a precipitation tank 25 is located, said filter 3 having a discharge conduit 39. The bottom of the precipitation tank 25 is connected to the feed conduit 21 through a sludge recycling conduit 29 wherein a pump 30 is located. Lastly the plant comprises a water recycling conduit 33 wherein a pump 34 is located and which is connected to the discharge conduit 39 and the communication conduit 22.

In the plant shown the polluted water supplied through the supply conduit 21 is mixed with recycled sludge supplied through the sludge recycling conduit 29 and the mixture is introduced into the tank 20 wherein anaerobic conditions are maintained. The anaerobically treated water and sludge are introduced into the tank 23 following admixture with nitrate-containing water supplied through the water recycling conduit 33. In the tank 23 anoxic conditions are maintained. After leaving the tank 23 the water flows through the conduit 24 to the precipitation tank 25 wherein sludge is separated off and further to the filter 3 wherein aerobic conditions are maintained. From the bottom of the precipitation tank 25 activated sludge is removed and a part thereof is conducted through the sludge recycling conduit 29 to the feed conduit 21.

The aerobically treated water flows from the filter 3 through the discharge conduit 39 from where a part of the nitrate-containing water is removed and recycled to the communication conduit 22 through the water recycling conduit 33.

In the filter 3 and the tanks 20 and 23 the same processes as explained in connection with Figs. 1 and 2 are effected.

## Claims

1. A process for the biological purification of polluted water, such as waste water wherein the polluted water is successively subjected to an anaerobic, an anoxic and an aerobic treatment in the presence of micro-organisms in order to reduce the nitrogen and phosphorus contents of the water, **characterized** in carrying out, on the one hand, the anaerobic and the anoxic treatment, and on the other hand, the aerobic treatment in the presence of separate micro-organism cultures

2. A process according to claim 1, **characterized** in successively subjecting a mixture of polluted water and a suspended micro-organism culture to an anaerobic and an anoxic treatment in one or more treatment zones following which the micro-organisms are separated from the water and then another micro-organism culture is added to the water and subsequently the mixture thus formed is subjected to treatment in one or more aerobic treatment zones, separating the micro-organism culture from the water thus treated and recycling a part of the separated water to the anoxic treatment zone.

3. A process according to claim 2, **characterized** in recycling at least part of the suspended micro-organism culture separated after treatment in the anoxic treatment zone to the anaerobic treatment zone.

4. A process according to claims 2 or 3, **characterized** in recycling at least part of the micro-organism culture separated from the aerobically treated water to the aerobic treatment zone.

5. A process according to any one of claims 2 - 4, **charac**t e r i z e d in carrying out the anaerobic and anoxic treatments in two separate treatment zones wherein anaerobic and anoxic conditions are alternatingly maintained and wherein polluted water is always conducted to the zone where anaerobic conditions are maintained.

6. A process according to claim 1, **characterized** in using at least two immobilised micro-organism cultures which are kept in anaerobic or anoxic and aerobic conditions, respectively, and in recycling a part of the water which leaves the micro-organism culture kept in aerobic conditions to the micro-organism culture which is kept in anoxic conditions.

7. A process according to claim 6, **characterized** in using three immobilised micro-organism cultures and in keeping the two first micro-organism cultures of the three in alternatingly anaerobic and anoxic conditions and in conducting polluted water alternatingly to the first and the second of the two first immobilised micro-organism cultures, polluted water, however, always being conducted to the micro-organism culture which is kept in anaerobic conditions whereas the discharge from the immobilised micro-organism culture which is kept in anaerobic conditions is conducted to the second of the two first immobilised micro-organism cultures together with nitrate-containing water recycled from the immobilised micro-organism culture which is kept in aerobic conditions.

8. A process according to claim 1, **characterized** in successively subjecting the polluted water to an anaerobic and an anoxic treatment in two zones using a suspended micro-organism culture, separating the micro-organism culture from the water thus treated, said micro-organism culture being recycled to the anaerobic treatment zone, and subjecting the water relieved of the micro-organism culture to an aerobic treatment with an immobilised micro-organism culture following which a part of the aerobically treated water is recycled to the anoxic treatment step.

9. A plant for carrying out the process according to claim 1, **characterized** in that it comprises means for successively subjecting polluted water to an anaerobic and an anoxic treatment using a first micro-organism culture, means for subjecting the anaerobically and anoxically treated water to an aerobic treatment using a second micro-organism culture which is different from the first micro-organism culture, means for recycling aerobically treated water to the means for treating the water in anoxic conditions and optionally means for removing excess sludge from the plant.

10. A plant according to claim 9, **characterized** in that the means for anaerobic and anoxic treatment of the water using the first micro-organism culture comprise an anaerobic and an anoxic tank, means for separating off sludge from the anoxically treated water and means for recycling the sludge thus separated to the anaerobic tank.

11. A plant according to claim 9, **characterized** in that the means for anaerobic and anoxic treatment of the water using the first micro-organism culture comprise at least one biological filter comprising a carrier material to which the micro-organism culture is attached.

12. A plant according to any one of claims 9 - 11, **characterized** in that the means for aerobic treatment of the anaerobically and anoxically treated water using the second micro-organism culture comprise an aerobic tank, means for separating sludge from the aerobically treated water and means for recycling the sludge thus separated to the aerobic tank.

13. A plant according to any one of claims 9 - 11, **characterized** in that the means for aerobic treatment of the anaerobically and anoxically treated water using the second micro-organism culture comprise a biological filter comprising a carrier material to which the micro-organism culture is attached.

14. A plant according to claims 11 or 13, **characterized** in that it further comprises further means for periodical backwashing of the filters for removal of excess micro-organism containing material from the filters.

15. A plant according to claim 9, **characterized** in that it comprises three biological filters connected in series wherein anaerobic, anoxic and aerobic conditions, respectively, can be maintained, and where it further comprises means for alternatingly conducting polluted water to the two first filters and for alternatingly changing the treatment conditions in said filters from anaerobic to anoxic treatment and vice versa.

## Patentansprüche

1. Ein Verfahren zur biologischen Reinigung von verunreinigtem Wasser, z.B. Abwasser, wobei das verunreinigte Wasser aufeinanderfolgend einer anaeroben, einer anoxischen und einer aeroben Behandlung in Anwesenheit von Mikroorganismen unterworfen wird, um die Stickstoff- und Phosphor-Gehalte des Wassers herabzusetzen, dadurch gekennzeichnet, daß die anaerobe und die anoxische Behandlung einerseits und die aerobische Behandlung andererseits bei Anwesenheit von getrennten Kulturen von Mikroorganismen ausgeführt werden.

2. Ein Verfahren gemäß Anspruch 1, dadurch gekennzeichnet, daß eine Mischung eines verunreinigten Wassers und einer suspendierten Kultur von Mikroorganismen aufeinanderfolgend einer anaeroben und einer anoxischen Behandlung in einer oder mehreren Behandlungszonen unterworfen wird, woraufhin folgend die Mikroorganismen von dem Wasser getrennt werden und sodann eine andere Kultur von Mikroorganismen dem Wasser hinzugefügt wird und daraufhin die somit gebildete Mischung der Behandlung in einer oder mehreren aeroben Behandlungszonen unterworfen wird, wobei die Kultur der Mikroorganismen von dem somit behandelten Wasser getrennt wird und ein Teil des getrennten Wassers zu einer anoxischen Behandlungszone rezykliert wird.

3. Ein Verfahren gemäß Anspruch 2, dadurch gekennzeichnet, daß wenigstens ein Teil der suspendierten Kultur von Mikroorganismen, die nach der Behandlung in der anoxischen Behandlungszone separiert werden, zu der anaeroben Behandlungszone rezykliert wird.

4. Ein Verfahren gemäß Anspruch 2 oder 3, dadurch gekennzeichnet, daß wenigstens ein Teil der Kultur von Mikroorganismen, welche von dem aerob behandelten Wasser getrennt wird, zu der aeroben Behandlungszone rezykliert wird.

5. Ein Verfahren gemäß einem der Ansprüche 2 bis 4, dadurch gekennzeichnet, daß die anaeroben und anoxischen Behandlungen in zwei getrennten Behandlungszonen ausgeführt werden, in welchen die anaeroben und anoxischen Bedingungen alternierend aufrechterhalten werden und in welchen verunreinigtes Wasser stets zu der Zone zugeführt wird, in welcher die anaeroben Bedingungen aufrechterhalten werden.

6. Ein Verfahren gemäß Anspruch 1, dadurch gekennzeichnet, daß wenigstens zwei immobilisierte Kulturen von Mikroorganismen verwendet werden, wobei diese Kulturen ebenfalls in anaeroben oder anoxischen und aeroben Zuständen gehalten werden, und daß ein Teil des Wassers, welches die Kultur von Mikroorganismen, die in aeroben Zuständen gehalten wird, verläßt, zu der Kultur von Mikroorganismen rezykliert wird, welche in anoxischen Zuständen gehalten wird.

7. Ein Verfahren gemäß Anspruch 6, dadurch gekennzeichnet, daß drei immobilisierte Kulturen von Mikroorganismen verwendet werden und daß die zwei ersten Kulturen von Mikroorganismen der drei Kulturen in alternierenden anaeroben und anoxischen Zuständen gehalten werden und daß verunreinigtes Wasser alternierend zu der ersten und der zweiten der zwei ersten immobilisierten Kulturen von Mikroorganismen zugeführt wird, wobei jedoch verunreinigtes Wasser stets zu der Kultur von Mikroorganismen zugeführt wird, die in anaeroben Zuständen gehalten wird, während die Abgabe von der immobilisierten Kultur von Mikroorganismen, die in anaeroben Zuständen gehalten wird, zu der zweiten der zwei ersten immobilisierten Kulturen von Mikroorganismen zusammen mit nitrathaltigem Wasser zugeführt wird, das von der immobilisierten Kultur von Mikroorganismen rezykliert wird, welche in aeroben Zuständen gehalten wird.

8. Ein Verfahren gemäß Anspruch 1, dadurch gekennzeichnet, daß das verunreinigte Wasser aufeinanderfolgend einer anaeroben und einer anoxischen Behandlung in zwei Zonen unter Verwendung einer suspendierten Kultur von Mikroorganismen unterworfen wird, daß die Kultur von Mikroorganismen von dem somit behandelten Wasser getrennt wird, das die genannte Kultur von Mikroorganismen zu der anaeroben Behandlungszone rezykliert wird, und daß das Wasser, das von der Kultur von Mikroorganismen entlastet ist, einer aeroben Behandlung mit einer immobilisierten Kultur von Mikroorganismen unterworfen wird, woraufhin folgend ein Teil des aerob behandelten Wassers zu dem anoxischen Behandlungsschritt rezykliert wird.

9. Eine Anlage zum Ausführen des Verfahrens gemäß Anspruch 1, dadurch gekennzeichnet, daß sie aufweist: eine Einrichtung zum aufeinanderfolgenden Unterwerfen von verunreinigtem Wasser einer anaeroben und einer anoxischen Behandlung unter Verwendung einer ersten Kultur von Mikroorganismen, eine Einrichtung zum Unterwerfen des anaerob und anoxisch behandelten Wassers einer aeroben Behandlung unter Verwendung einer zweiten Kultur von Mikroorganismen, die von der ersten Kultur von Mikroorganismen unterschiedlich ist, eine Einrichtung zum Rezyklieren des aerob behandelten Wassers zu der Einrichtung zum Behandeln des Wassers in anoxischen Zuständen und wahlweise eine Einrichtung zum Entfernen von Überschußschlamm von der Anlage.

10. Eine Anlage gemäß Anspruch 9, dadurch gekennzeichnet, daß die Einrichtung zur anaeroben und anoxischen Behandlung des Wassers unter Verwendung der ersten Kultur von Mikroorganismen einen anaeroben und einen anoxischen Behälter, eine Einrichtung zum Separieren des Schlammes von dem anoxisch behandelten Wasser und eine Einrichtung zum Rezyklieren des somit separierten Schlammes zu dem anaeroben Behälter aufweist.

11. Eine Anlage gemäß Anspruch 9, dadurch gekennzeichnet, daß die Einrichtung zur anaeroben und anoxischen Behandlung des Wassers unter Verwendung der ersten Kultur von Mikroorganismen wenigstens ein biologisches Filter mit einem Trägermaterial aufweist, welchem die Kultur von Mikroorganismen hinzugegeben ist.

12. Eine Anlage gemäß einem der Ansprüche 9 bis 11, dadurch gekennzeichnet, daß die Einrichtung zur aeroben Behandlung des anaerob und anoxisch behandelten Wassers unter Verwendung der zweiten Kultur von Mikroorganismen einen aeroben Behälter, eine Einrichtung zum Separieren des Schlammes von dem aerob behandelten Wasser und eine Einrichtung zum Rezyklieren des somit separierten Schlammes zu dem aeroben Behälter aufweist.

13. Eine Anlage gemäß einem der Ansprüche 9 bis 11, dadurch gekennzeichnet, daß die Einrichtung zur aeroben Behandlung des anaerob und anoxisch behandelten Wassers unter Verwendung der zweiten Kultur von Mikroorganismen ein biologisches Filter mit einem Trägermaterial aufweist, welchem die Kultur von Mikroorganismen hinzugegeben ist.

14. Eine Anlage gemäß Anspruch 11 oder 13, dadurch gekennzeichnet, daß sie ferner eine weitere Einrichtung zum periodischen Rückwaschen der Filter zum Entfernen von Mikroorganismen im Überschuß enthaltendem Material von den Filtern aufweist.

15. Eine Anlage gemäß Anspruch 9, dadurch gekennzeichnet, daß sie drei in Serie miteinander verbundene, biologische Filter aufweist, in welchen jeweilige anaerobe, anoxische und aerobe Zustände aufrecht erhalten werden können, und wobei die Anlage weiterhin eine Einrichtung zum alternierenden Zuführen von verunreinigtem Wasser zu den zwei ersten Filtern und zum alternierenden Ändern der Behandlungsbedingungen in den genannten Filtern von der anaeroben zu der anoxischen Behandlung und umgekehrt aufweist.

## Revendications

1. Procédé pour l'épuration biologique des eaux polluées, telles que les eaux de rejet, dans lequel les eaux polluées sont successivement soumises à un traitement en anaérobie, en anoxie et en aérobie en présence de microorganismes pour réduire les teneurs en azote et en phosphore de l'eau, caractérisé en ce que l'on effectue d'une part le traitement en anaérobie et en anoxie et d'autre part le traitement en aérobie en présence de cultures de microorganismes séparées.

2. Procédé selon la revendication 1, caractérisé en ce que l'on soumet successivement un mélange d'eaux polluées et une culture de microorganismes en suspension à un traitement en anaérobie et en anoxie dans une ou plusieurs zones de traitement, les microorganismes sont ensuite séparés de l'eau, puis une autre culture de microorganismes est ajoutée à l'eau et consécutivement le mélange ainsi formé est soumis à un traitement dans une ou plusieurs zones de traitement en aérobie, en séparant la culture de microorganismes de l'eau ainsi traitée et en recyclant une partie de l'eau séparée dans la zone de traitement en anoxie.

3. Procédé selon la revendication 2, caractérisé en ce que l'on recycle au moins une partie de la culture de microorganismes en suspension séparée après traitement dans la zone de traitement en anoxie dans la zone de traitement en anaérobie.

4. Procédé selon la revendication 2 ou 3, caractérisé en ce que l'on recycle au moins une partie de la culture de microorganismes séparée de l'eau traitée en aérobie dans la zone de traitement aérobie.

5. Procédé selon l'une quelconque des revendications 2-4, caractérisé en ce que l'on réalise le traitement en anaérobie et en anoxie dans deux zones de traitement séparées, dans lesquelles les conditions anaérobies et d'anoxie sont alternativement maintenues et dans lesquelles les eaux polluées sont toujours conduites sur la zone où sont maintenues des conditions anaérobies.

6. Procédé selon la revendication 1, caractérisé en ce que l'on utilise au moins deux cultures de microorganismes immobilisées qui sont maintenues dans des conditions anaérobie ou d'anoxie et aérobies respectivement, et en recyclant une partie de l'eau qui quitte la culture de microorganismes dans des conditions aérobies vers la culture de microorganismes qui est maintenue dans des conditions d'anoxie.

7. Procédé selon la revendication 6, caractérisé en ce que l'on utilise trois cultures de microorganismes immobilisées et que l'on maintient les deux premières cultures de microorganismes parmi les trois dans des conditions alternativement anaérobies et d'anoxie et en conduisant alternativement les eaux polluées vers les premières et secondes cultures parmi les deux premières cultures de microorganismes immobilisées, les eaux polluées étant toutefois toujours conduites vers la culture de microorganismes qui est maintenue dans des conditions anaérobies, tandis que la décharge de la culture de microorganismes immobilisée qui est maintenue dans des conditions anaérobies est conduite vers la seconde des deux premières cultures de microorganismes immobilisées conjointement avec de l'eau contenant du nitrate recyclé à partir de la culture de microorganismes immobilisée qui est maintenue dans des conditions aérobies.

8. Procédé selon la revendication 1, caractérisé en ce que l'on soumet successivement les eaux polluées à un traitement en anaérobie et en anoxie dans deux zones en utilisant une culture de microorganismes en suspension, en séparant la culture de microorganismes de l'eau ainsi traitée, la culture de microorganismes étant recyclée sur la zone de traitement anaérobie et en soumettant l'eau libérée de la culture de microorganismes à un traitement aérobie avec une culture de microorganismes immobilisée, après quoi une partie de l'eau traitée par voie aérobie est recyclée sur l'étape de traitement d'anoxie.

9. Système pour réaliser le procédé selon la revendication 1, caractérisé en ce qu'il comprend des moyens pour soumettre successivement les eaux polluées à un traitement en anaérobie et en anoxie en utilisant une première culture de microorganismes, des moyens pour soumettre les eaux traitées en anaérobie et en anoxie à un traitement aérobie en utilisant une seconde culture de microorganismes qui est différente de la première culture de microorganismes, des moyens pour recycler des eaux traitées en aérobie vers les moyens pour traiter les eaux dans des conditions d'anoxie et facultativement des moyens pour enlever les boues excédentaires du système.

10. Système selon la revendication 9, caractérisé en ce que les moyens pour le traitement en anaérobie et en anoxie des eaux en utilisant la première culture de microorganismes comprennent un réservoir anaérobie et d'anoxie, des moyens pour éliminer les boues des eaux traitées par anoxie et des moyens pour recycler les boues ainsi séparées dans le réservoir anaérobie.

11. Système selon la revendication 9, caractérisé en ce que les moyens pour le traitement en anaérobie et en anoxie de l'eau en utilisant la première culture de microorganismes comprennent au moins un filtre biologique comprenant un matériau de support sur lequel est fixé la culture de microorganismes.

12. Système selon l'une quelconque des revendications 9-11, caractérisé en ce que les moyens pour le traitement en aérobie de l'eau traitée en anaérobie et en anoxie en utilisant la seconde culture de microorganismes comprennent un réservoir aérobie, des moyens pour séparer la boue des eaux traitées en aérobie et des moyens pour recycler les boues ainsi séparées dans le réservoir aérobie.

13. Système selon l'une quelconque des revendications 9-11, caractérisé en ce que les moyens pour le traitement en aérobie des eaux traitées en anaérobie et en anoxie en utilisant la seconde culture de microorganismes comprennent un filtre biologique comprenant un matériau de support sur lequel est fixé la culture de microorganismes.

14. Système selon les revendications 11 ou 13, caractérisé en ce qu'il comprend de plus des moyens supplémentaires pour relaver périodiquement les filtres pour en extraire les matériaux contenant des microorganismes excédentaires.

15. Système selon la revendication 9, caractérisé en ce qu'il comprend trois filtres biologiques montés en série, dans lesquels on peut maintenir respectivement des conditions anaérobies, d'anoxie et aérobies, et qui comprend de plus des moyens pour conduire de façon alternée les eaux polluées sur les deux premiers filtres et pour modifier de façon alternée les conditions de traitement dans les filtres pour passer d'un traitement anaérobie à un traitement d'anoxie et vice-versa.
